Europäisches Patentamt

European Patent Office

Office européen des brevets

(11) Numéro de publication : **0 342 083 B1**

## (12) FASCICULE DE BREVET EUROPEEN

(45) Date de publication du fascicule du brevet :
**09.12.92 Bulletin 92/50**

(51) Int. Cl.⁵ : **A01B 73/06,** A01B 21/08

(21) Numéro de dépôt : **89401157.6**

(22) Date de dépôt : **24.04.89**

(54) **Pulvériseur à disques à cadre autoporteur comportant un système d'articulation des trains de disques à orientation longitudinale pour le transport sur route.**

(30) Priorité : **11.05.88 FR 8806372**

(43) Date de publication de la demande :
**15.11.89 Bulletin 89/46**

(45) Mention de la délivrance du brevet :
**09.12.92 Bulletin 92/50**

(84) Etats contractants désignés :
**AT BE CH DE ES GB IT LI NL**

(56) Documents cités :
**EP-A- 0 114 983**
**DE-U- 8 517 625**
**US-A- 3 730 280**
**US-A- 4 300 640**
**US-A- 4 364 581**
**US-A- 4 450 918**

(73) Titulaire : **Etablissements MONERIE & CIE,
Société Anonyme dite:
La Chapelle-aux-Naux
F-37130 Langeais (FR)**

(72) Inventeur : **Robin, Jean-Pierre
L'aulnay Bricart
F-37130 Langeais (FR)**
Inventeur : **Bonvin, Eric
Saint Michel sur Loire
F-37130 Langeais (FR)**

(74) Mandataire : **Jolly, Jean-Pierre et al
Cabinet Jolly 54, rue de Clichy
F-75009 Paris (FR)**

EP 0 342 083 B1

## Description

La présente invention concerne les pulvériseurs à disques de grande largeur et en particulier un pulvériseur à disques du type à cadre autoporteur, à savoir pourvu d'au moins deux rangées avant et arrière de trains de disques opposés et prévus pour être disposés en forme de X ou X décalé dans la position de travail, le cadre ou bâti étant essentiellement de forme rectangulaire, monté sensiblement en position centrale relativement aux rangées de trains de disques et pourvu de roues latérales mobiles en hauteur pour le réglage de la profondeur de travail et le transport sur route de l'appareil, lesdits trains de disques étant articulés suspendus chacun au cadre support suivant un axe vertical de rotation fixé à demeure sur le châssis et disposé sur sa largeur à distance du plan longitudinal médian du pulvériseur, de manière à autoriser par un verrouillage adéquat leur mise en position de travail à ladite forme de X ou X décalé, ou leur rotation en position sensiblement longitudinale conférant au pulvériseur dans cette position repliée une largeur au plus égale à 2,50m, adaptée au transport sur route.

On sait que pour s'adapter aux engins tracteurs agricoles de grande puissance, les pulvériseurs actuels ont une largeur de travail importante et largement supérieure à 2,50m qui représente la limite réglementaire de largeur pour le transport de matériel sur route. Ces pulvériseurs de grande largeur de travail doivent donc être amenés à une position repliée, de largeur réduite, permettant leur transport sur route.

Dans ce contexte, on connaît déjà les pulvériseurs comportant un système d'articulation hydraulique des trains de disques permettant le repliement à la verticale de chacun de ces trains de disques. Cependant, un tel système fait intervenir un bâti articulé à structure complexe et coûteuse.

On connaît également des pulvériseurs dont les trains de disques comportent une partie d'extension repliable permettant de réduire la largeur de l'appareil en position de transport. Néanmoins, cette solution nécessite des équipements supplémentaires de paliers pour les parties de trains de disques repliables, ressorts d'aide au rabattement et éléments de verrouillage de ces parties en position.

On connaît par US-A-3 730 280 un pulvériseur comportant des trains de disques rabattables longitudinalement en position de transport. Le cadre de ce pulvériseur ne comporte pas d'axes de rotation fixés à demeure pour les trains de disques mais des éléments à broche d'articulation aux coins du bâti. Ce pulvériseur utilise des secteurs centraux mobiles d'accrochage des trains en position de travail qu'il est nécessaire de translater avant d'effectuer la mise en position de transport. Il faut alors enfiler les broches d'articulation aux coins du châssis qui permettront la rotation des trains de disques. Cette disposition rend la manoeuvre de rotation des trains mal commode.

On connaît par ailleurs par US-A-4 300 640 un pulvériseur à cadre articulé dont les trains de disques sont montés articulés sur des axes de rotation au châssis ou cadre du pulvériseur. Le cadre de ce pulvériseur est complexe et peu rigide, nécessitant une roue porteuse à chaque train de disques.

Le but essentiel de l'invention est d'apporter une solution particulièrement simple et originale au repliement en position de transport des pulvériseurs de grande largeur notamment, sans nuire par ailleurs à leurs possibilités déjà connues et qui concernent par exemple l'orientation variable des trains de disques au travail ou le fait de l'utilisation d'un disque central entre les trains de disques.

Le pulvériseur à disques selon l'invention est en effet caractérisé en ce que chacun des trains de disques comporte à son extrémité intérieure une chape-crochet coopérant en engagement respectivement avec un secteur central fixe de verrouillage à trous, lequel autorise une ouverture variable de positionnement des trains, les secteurs de verrouillage étant solidaires d'une entretoise longitudinale médiane du bâti.

Jusqu'à maintenant, en raison de l'articulation des trains de disques dans le plan longitudinal médian de l'appareil ou proche, les pulvériseurs conventionnels ne permettaient pas cette orientation longitudinale des trains de disques sur l'appareil. Les trains de disques correspondants n'autorisaient en effet que l'orientation tranversale variable(à forme de X ou X décalé) pour la position de travail et donc un faible angle de rotation dans le plan horizontal.

L'invention apporte grâce au large débattement des trains de disques, jusqu'à l'orientation longitudinale, la possibilité de réduire considérablement la largeur du pulvériseur en position de transport, celle-ci pouvant être réduite pratiquement à la largeur du bâti avec ses roues.

Naturellement, les trains étant amenés en position longitudinale et allongeant le pulvériseur, il est nécessaire d'adapter la longueur de la flèche de traction relativement à l'engin tracteur à cette position de transport.

Selon des caractéristiques avantageuses de l'invention, les axes d'articulation des trains de disques sont disposés sur les longerons extérieurs longitudinaux du bâti, symétriquement 2 à 2 relativement au plan longitudinal médian et de préférence aux coins du bâti. Le verrouillage de positionnement du pulvériseur en travail est obtenu en crochetant la chape-crochet des trains de disques de façon variable sur les différents trous du dit secteur de verrouillage.

Le verrouillage en position longitudinale de transport des trains de disques est obtenu de façon simple à l'aide de pattes judicieusement disposées relativement au bâti et coopérant avec ladite chape d'extrémité des trains de disques.

La flèche de timon est avantageusement montée télescopique de manière à être fixée à longueur variable en fonction de l'engin tracteur et du développement en longueur de l'appareil en position de transport. De préférence, en fonction de l'engin tracteur, on disposera de deux positions de longueurs de la flèche, une position courte de travail et une position longue de transport sur route.

Une forme de réalisation d'un pulvériseur selon l'invention est à présent décrite à titre d'exemple non limitatif et en référence aux dessins annexés sur lesquels :

- la figure 1 est une vue de dessus d'un pulvériseur selon l'invention, en X, montrant les trains de disques en position de travail sur un côté et en position de transport de l'autre et,
- la figure 2 est une vue montrant le cadre ou bâti du pulvériseur avec sa flèche de timon,
- la figure 3 est une vue d'une variante de pulvériseur selon l'invention comportant des trains de disques à la forme de X décalé en position de travail.

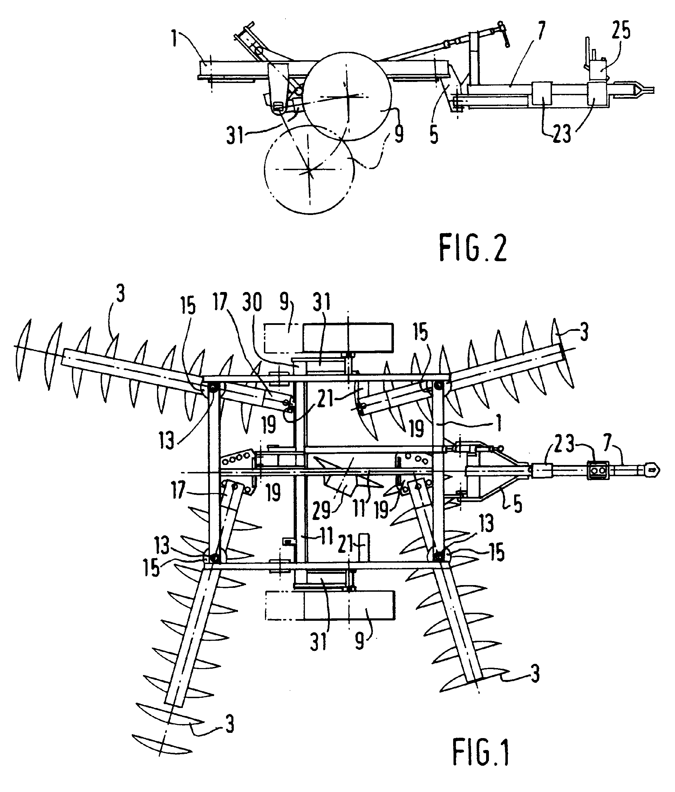

Comme représenté sur la figure 1, le pulvériseur selon l'invention est constitué d'un bâti porteur 1, de quatre trains de disques 3 suspendus articulés audit bâti, d'un timon avant 5 avec flèche de traction 7 et de deux roues latérales 9 solidaires du bâti et mobiles en hauteur permettant le réglage du la profondeur de travail et le transport sur route de pulvériseur. Le bâti 1 est rectangulaire, le cadre externe étant complété d'entretoises 11 internes, respectivement longitudinale médiane et transversale.

Les trains de disques 3 sont montés articulés sur le bâti à chacun de ses coins. Leur axe d'articulation 13, disposé sensiblement à un intervalle de la moitié de la largeur du bâti sur chacun des trains de disques, est planté verticalement sur le bâti assurant ainsi le débattement de rotation dans le plan horizontal. L'axe est en outre complété d'un disque et contre-disque rotatif 15, guidant le rotation du train dans le plan horizontal. L'extrémité interne de chacun des trains de disques est munie d'une chape-crochet 17 coopérant en engagement avec un secteur de verrouillage central à trous 19 solidaire du bâti, cet agencement permettant une ouverture variable des trains de disques en position de travail (en forme de X) comme l'indique la figure avec les trains disposés transversalement sur l'un des côtés de l'appareil. De l'autre côté du pulvériseur, les trains ont été rentrés en position longitudinale de transport, verrouillés dans cette position par des pattes de verrouillage 21 solidaires du bâti. Cette autre position permet de réduire la largeur du pulvériseur pour son transport sur route. La largeur du pulvériseur dans cette position de transport est de 2,50m, pratiquement égale à celle du bâti avec ses roues, alors qu'en position de travail, la largeur du pulvériseur dépasse 4,50m.

Comme mentionné précédemment, le timon avant 5 comporte une flèche de traction 7 montée télescopique. Cette dernière coulisse entre deux colliers 23 solidaires du timon (figure 2). L'un des colliers possède un dispositif de verrouillage 25 de la flèche muni d'une tige de crochetage rappelée élastiquement en engagement dans des trous correspondants prévus sur la flèche. On pourra avoir deux jeux de trous, l'un pour une position de travail ou position raccourcie de la flèche et l'autre pour une position de transport ou position allongée de la flèche. Cette dernière position permet notamment la rotation de l'engin tracteur relativement au pulvériseur lorsque les trains de disques antérieurs ont été tournés vers l'avant en position de transport.

Par ailleurs, le pulvériseur peut comporter des équipements connus, tel qu'un disque indépendant 29 monté en position centrale sur le bâti. Ce disque évite en particulier de mettre les trains de disques opposés en recouvrement sur la portion de travail centrale.

En outre, la manoeuvre des trains de disques en position de transport est extrêmement simple et résulte à l'évidence de la description précédente. Il suffit d'élever le bâti 1 par ses deux roues latérales 9 (trait mixte ligne de la figure 2) par commande, par exemple, d'un vérin hydraulique à partir du tracteur, ce vérin agissant sur l'orientation des pivots articulés 31 de l'essieu porteur 30 relativement au bâti. Les trains de disques sont alors relevés du sol. Il suffit de déverrouiller les trains de disques 3 en position transversale de travail des secteurs de verrouillage 19. Chaque train de disques, facilement manoeuvrable à la main, est alors poussé jusqu'à ce que sa chape d'extrémité 17 s'engage dans la patte de verrouillage de transport 21. Le verrouillage est alors effectué comme précédemment en engageant une tige de crochetage dans le trou de la patte.

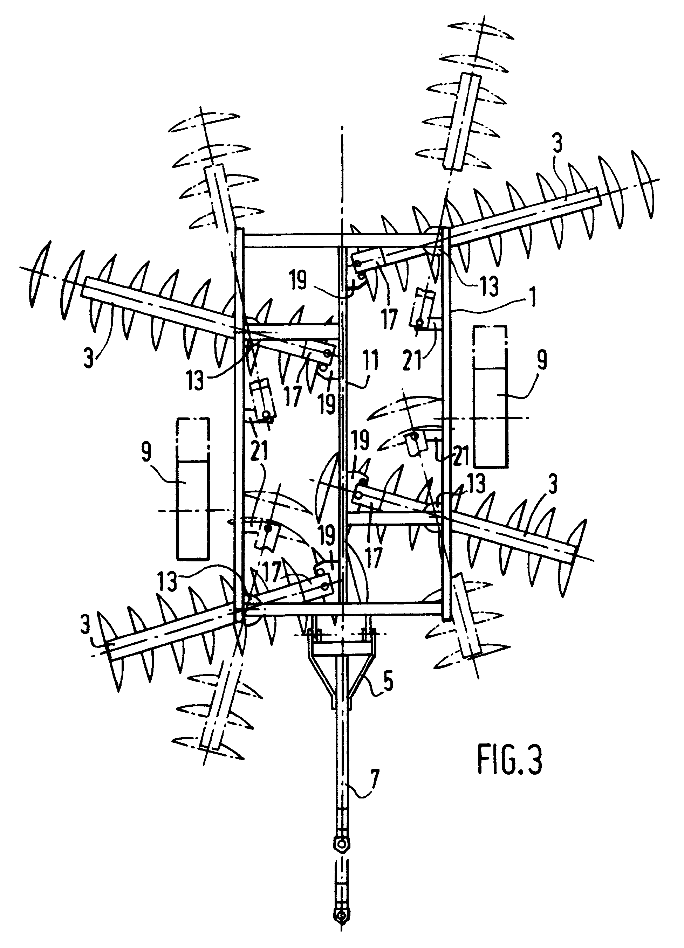

Enfin, le principe de repliement en position de transport selon l'invention s'applique également aux pulvériseurs comportant des trains de disques 3 à forme de X décalé en position de travail (figure 3). Le bâti 1 ainsi que la flèche de traction 7 doivent être rallongés pour tenir compte du décalage. Le disque central est éliminé et les trains de disques avant se recouvrent dans leur position centrale. Les axes d'articulation 13 des trains de disques se trouvent respectivement pour les trains externes avant et arrière aux coins du bâti et pour les autres trains sur les longerons longitudinaux extérieurs du bâti. La position de transport est obtenue comme précédemment par replacement longitudinal des trains de disques (trait mixte).

L'invention apporte ainsi un pulvériseur de structure simple et fiable, et dont le principe de repliement en position de transport convient particulièrement bien aux pulvériseurs de grande largeur.

## Revendications

1. Pulvériseur à disques, du type à cadre autoporteur (1), à savoir pourvu d'au moins deux rangées avant et arrière de trains de disques opposés (3) et prévus pour être disposés en forme de X ou X décalé dans la position de travail, le cadre ou bâti (1) étant essentiellement de forme rectangulaire, monté sensiblement en position centrale pourvu de roues latérales (9) mobiles en hauteur pour le réglage de la profondeur de travail et le transport sur route de l'appareil, lesdits trains de disques (3) étant articulés suspendus chacun au cadre support (1) suivant un axe vertical de rotation (13) fixé à demeure sur le châssis et disposé sur sa largeur à distance du plan longitudinal médian du pulvériseur, de manière à autoriser par un verrouillage adéquat leur mise en position de travail à ladite forme de X ou X décalé, ou leur rotation en position sensiblement longitudinale conférant au pluvériseur dans cette position repliée une largeur au plus égale à 2,50m, adaptée au transport sur route, pulvériseur caractérisé en ce que chacun des trains de disques comporte à son extrémité intérieure une chape-crochet (17) coopérant en engagement respectivement avec un secteur central fixe de verrouillage à trous (19), lequel autorise une ouverture variable de positionnement des trains, les secteurs de verrouillage (19) étant solidaires d'une entretoise longitudinale médiane (11) du bâti.

2. Pulvériseur selon la revendication 1, caractérisé en ce qu'il est équipé d'un timon avant (5) muni d'une flèche (7) montée télescopique, raccourcissable en position de travail.

3. Pulvériseur selon la revendication 1 ou 2, caractérisé en ce que les axes d'articulation (13) des trains de disques (3) sont disposés sur les longerons extérieurs longitudinaux du bâti (1), symétriquement 2 à 2 relativement au plan longitudinal médian de l'appareil.

4. Pulvériseur selon l'une des revendications précédentes, caractérisé en ce que les axes d'articulation (13) des trains de disques (3) sont disposés aux coins du bâti (1).

5. Pulvériseur selon l'une des revendications précédentes, caractérisé en ce que le verrouillage des trains de disques (3) en position de transport est réalisé par l'engagement de la dite chape-crochet (17) de chacun des trains de disques (3) sur une patte de fixation (21) solidaire du bâti (1) et convenablement disposée sur celui-ci.

6. Pulvériseur selon l'une des revendications précédentes, caractérisé en ce que la distance de l'axe d'articulation (13) des trains de disques (3) à leur extrémité interne est égale sensiblement à la demi-largeur du bâti (1).

7. Pulvériseur selon l'une des revendications précédentes, caractérisé en ce qu'il comporte un disque central (29).

8. Pulvériseur selon l'une des revendications 1, 2, et 5, caractérisé en ce que les trains de disques (3) sont disposés de manière à être orientés en forme de X décalé en position de travail, au moins deux trains de disques opposés se recouvrant dans la position centrale.

## Claims

1. A disk harrow, of the buggy-frame type (1), that is to say provided with at least two rows, front and back, of opposing trains of disks (3) and designed to be arranged in the form of an X or a staggered X in the working position, the frame (1) being essentially rectangular in shape, mounted in a substantially central position and provided with vertically mobile lateral wheels (9) for regulating the depth of work and the road transportation of the apparatus, said trains of disks (3) being articulated each in suspension on the support frame (1) according to a vertical axis of rotation (13) fixed permanently on the chassis and arranged over its width at a distance from the median longitudinal plane of the harrow, in such a way as to permit them, by appropriate locking, to be set in the working position in said X or staggered X configuration, or to be rotated into a substantially longitudinal position, giving the harrow in this folded position a width at most equal to 2.5 m, adapted to road transportation, said harrow being characterized in that each of the trains of disks comprises at its inner end a cover/hook (17) cooperating in engagement respectively with a fixed central hole-locking sector (19), which permits variable opening for positioning the trains of disks, the locking sectors (19) being integral with a longitudinal median brace (11) of the frame.

2. A harrow according to claim 1, characterized in that it is equipped with a front drawbar (5) provided with a telescopically mounted beam (7) which can be shortened in the working position.

3. A harrow according to claim 1 or claim 2, characterized in that the axes of articulation (13) o disk trains (3) are arranged on external longitudinal of the frame (1), symmetrically in pairs with respect to the longitudinal median plane of the apparatus.

4. A harrow according to any one of the preceding claims, characterized in that the axes of articulation (13) of the disk trains (3) are arranged at the corners of the frame (1).

5. A harrow according to any one of the preceding claims, characterized in that locking of the disk trains (3) in the transportation position is effected by engagement of said cover/hook (17) of each of the disk trains (3) onto a fastening tab (21) integral with the frame (1) and suitably arranged thereon.

6. A harrow according to any one of the preceding claims, characterized in that the distance from the axis of articulation (13) of the disk trains (3) to their inner ends is substantially equal to half the width of the frame (1).

7. A harrow according to any one of the preceding claims, characterized in that it comprises a central disk (29).

8. A harrow according to any one of claims 1, 2 and 5, characterized in that the disk trains (3) are arranged in such a way as to be oriented in the form of a staggered X in the working position, at least two opposing disk trains overlapping in the central position.

**Patentansprüche**

1. Scheibenegge mit selbsttragendem Rahmen (1) und mit wenigstens zwei, vorne und hinten angeordneten Reihen einander gegenüberliegender Scheibenträger (3), die in der Form eines X oder eines versetzten X in der Arbeitsstellung angeordnet sind, wobei der Rahmen oder das Gestell (1) im wesentlichen rechteckig ausgebildet ist und im wesentlichen in zentraler Stellung angeordnet ist sowie mit seitlichen Rädern (9) versehen ist, deren Höhe veränderbar ist, um die Arbeitshöhe einerseits und die Transporthöhe der Vorrichtung über der Straße andererseits zu regeln, wobei jeder der genannten Scheibenträger (3) gelenkig an dem Tragrahmen (1) angeordnet und um eine vertikale Drehachse (13), die fest am Chassis angeordnet ist, drehbar ist, welche Achse mit Abstand von der Längsmittelebene der Egge angeordnet ist und eine geeignete Verriegelung in der Arbeitsstellung in der Form eines X oder eines versetzten X ermöglicht oder die Drehung in eine im wesentlichen längs ausgerichtete Stellung, wodurch die Egge in dieser eingezogenen Stellung eine Breite von höchstens 2,5 m aufweist, welche zum Straßentransport geeignet ist, dadurch gekennzeichnet, daß jeder der Scheibenträger an seinem inneren Ende einen Kupplungshaken (17) trägt, der mit jeweils einem zentral angeordneten, mit Löchern (19) versehenen Verriegelungsabschnitt zusammenwirkt, welcher eine variierbare Öffnung der Stellung der Träger ermöglicht, wobei die Verriegelungsabschnitte (19) einstückig mit einem Längsmittelträger (11) des Rahmens ausgebildet sind.

2. Egge nach Anspruch 1, dadurch gekennzeichnet, daß sie mit einer Zugdeichsel (5) ausgerüstet ist, die mit einem teleskopierbar ausgebildeten Ausleger (7) versehen ist, der in der Arbeitsstellung verkürzbar ist.

3. Egge nach Anspruch 1 oder 2, dadurch gekennzeichnet, daß die Schwenkachsen (13) der Scheibenträger (3) auf den äußeren Längsträgern des Rahmens (1) angeordnet sind, und zwar in symmetrischer Weise relativ zur Längsmittelebene der Vorrichtung, wobei jeweils zwei Träger einander gegenüberliegen.

4. Egge nach einem der vorangegangenen Ansprüche, dadurch gekennzeichnet, daß die Schwenkachsen (13) der Scheibenträger (3) an den Ecken des Gestells (1) angeordnet sind.

5. Egge nach einem der vorangegangenen Ansprüche, dadurch gekennzeichnet, daß die Verriegelung der Scheibenträger (3) in der Transportstellung durch den Eingriff des genannten Kupplungshakens (17) eines jeden der Scheibenträger (3) mit einer Festlegeklaue (21) gegeben ist, welche einstückig mit dem Rahmen (1) ausgebildet und in geeigneter Weise auf diesem angeordnet ist.

6. Egge nach einem der vorangegangenen Ansprüche, dadurch gekennzeichnet, daß der Abstand der Schwenkachse (13) der Scheibenträger (3) an ihrem inneren Ende im wesentlichen der halben Breite des Rahmens (1) entspricht.

7. Egge nach einem der vorangegangenen Ansprüche, gekennzeichnet durch eine mittlere Scheibe (29).

8. Egge nach einem der Ansprüche 1, 2 und 5, dadurch gekennzeichnet, daß die Scheibenträger (3) in der Arbeitsstellung in der Form eines versetzten X angeordnet sind, wobei jeweils zwei einander gegenüberliegende Scheibenträger sich in der zentralen Stellung überdecken.

FIG.2

FIG.1

6

FIG.3